# FASCICULE DE BREVET EUROPEEN

(11) **EP 4 395 161 B1**
(45) Date de publication et mention de la délivrance du brevet: **10.09.2025**
(21) Numéro de dépôt: 23213747.1
(22) Date de dépôt: 01.12.2023
(51) Int. Cl.: H02P 23/24, H02P 25/04

(54) **DISPOSITIF DE COMMANDE D'UN INTERRUPTEUR POUR UN ACTIONNEUR ÉLECTROMÉCANIQUE ET PROCÉDÉ DE COMMANDE D'UN TEL DISPOSITIF**
VORRICHTUNG ZUR ANSTEUERUNG EINES SCHALTERS FÜR EINEN ELEKTROMECHANISCHEN AKTUATOR UND VERFAHREN ZUR STEUERUNG EINER SOLCHEN VORRICHTUNG
CONTROL DEVICE FOR A SWITCH FOR AN ELECTROMECHANICAL ACTUATOR AND METHOD FOR CONTROLLING SUCH A DEVICE

(30) Priorité: 29.12.2022 FR 2214668
(43) Date de publication de la demande: 03.07.2024
(73) Titulaire: Somfy Activites SA, 74300 Cluses (FR)
(72) Inventeur: PERDEREAU, Victor, 74300 CLUSES (FR)
(74) Mandataire: Germain Maureau

(56) Documents cités:
- EP-A1- 0 720 268
- EP-A2- 1 186 741
- FR-A1- 2 886 786

## Description

### Domaine Technique

La présente invention concerne un dispositif et un procédé de commande d'un interrupteur formé par un élément semiconducteur bidirectionnel commandé.

Elle concerne également un actionneur électromécanique comprenant un tel dispositif de commande et mettant en œuvre un tel procédé.

### Etat de la Technique

Un dispositif de commande d'un interrupteur formé par un élément semiconducteur bidirectionnel commandé pour un actionneur électromécanique comporte une charge disposée en série avec l'interrupteur, la charge étant adaptée pour être alimentée électriquement par un signal d'alimentation alternatif passant périodiquement par zéro. Le dispositif de commande comprend, en outre, des éléments de couplage, les éléments de couplage comprenant l'interrupteur et étant configurés pour coupler le signal d'alimentation alternatif à la charge, des éléments de détection d'un instant de passage par zéro de la tension d'alimentation alternative, les éléments de détection comprenant un optocoupleur configuré pour émettre un front montant ou un front descendant sur une entrée logique d'un circuit de traitement lorsque le signal d'alimentation alternatif est sensiblement égal à zéro, et des éléments de commande de l'interrupteur configurés pour émettre des impulsions de commande sur une borne de commande de l'interrupteur à la suite d'une réception d'un ordre de commande de l'actionneur électromécanique, chaque impulsion étant adaptée pour placer l'interrupteur dans un état fermé entre deux impulsions et prenant en compte un instant de commande déterminé à partir d'un instant de réception du front montant ou du front descendant de l'optocoupleur.

Il est connu de connu de commander l'interrupteur en mode pleine onde avec des impulsions de commande émises en synchronisme avec l'instant de réception du front montant ou du front descendant de l'optocoupleur correspondant sensiblement au passage à zéro du signal d'alimentation alternatif. Lors de l'utilisation d'un optocoupleur comme source d'informations pour piloter l'interrupteur, il est crucial que l'optocoupleur ne disperse pas trop car un décalage temporel du front montant ou du front descendant de l'optocoupleur entraine un décalage temporel de la commande de l'interrupteur par rapport au réel instant de passage à zéro du signal d'alimentation alternatif. En conséquence, selon que l'impulsion est émise trop tôt ou trop tard par rapport au réel instant de passage à zéro, l'interrupteur peut ne pas rester dans un état fermé entre deux impulsions de commande et ainsi causer une mal fonction de la charge voire un arrêt brutal de la charge.

Un inconvénient de l'utilisation d'un tel dispositif de commande est que l'optocoupleur est soumis en fonctionnement à une grande variabilité de détection, cette variabilité pouvant être liée par exemple à la variabilité entre série de composants, à la température, ou aux perturbations électriques ou électromagnétiques auxquelles est soumis l'optocoupleur.

Le document EP 0 720 268 A1 divulgue un dispositif de commande d'arrêt du fonctionnement d'un moteur en cas de détection d'une surcharge par rapport à une valeur seuil. Un triac commande l'arrêt du moteur sur la base de moyens de mesure du déphasage comprenant des moyens de détection du passage à zéro.

Le document FR 2 886 786 A1 décrit un moteur associé à un interrupteur commandé par une unité électronique de commande pour arrêter le moteur, ainsi qu'une paire de diodes. Les entrées logiques de l'unité de commande sont connectées à des capteurs de courant qui renseignent sur l'état de conduction des diodes.

Il est donc souhaitable de pouvoir disposer d'un dispositif de commande d'un interrupteur formé par un élément semiconducteur bidirectionnel commandé capable de compenser la variabilité de l'optocoupleur.

### Résumé de l'invention

Des modes de réalisation concernent un dispositif de commande d'un interrupteur formé par un élément semi-conducteur bidirectionnel commandé pour un actionneur électromécanique, l'actionneur électromagnétique comportant une charge disposée en série avec l'interrupteur et adaptée pour être alimentée électriquement par un signal d'alimentation alternatif passant périodiquement par zéro, le dispositif de commande comprenant, en outre :
- des éléments de couplage, les éléments de couplage comprenant l'interrupteur et étant configurés pour coupler le signal d'alimentation alternatif à la charge,
- des éléments de détection d'un instant de passage par zéro du signal d'alimentation alternatif, les éléments de détection comprenant au moins un optocoupleur, l'optocoupleur étant configuré pour émettre un front montant ou un front descendant sur une entrée logique d'un circuit de traitement lorsque le signal d'alimentation alternatif est sensiblement égal à zéro,
- des éléments de commande de l'interrupteur, les éléments de commande de l'interrupteur comprenant le circuit de traitement et étant configurés pour émettre des impulsions de commande sur une borne de commande de l'interrupteur à la suite d'une réception d'un ordre de commande de l'actionneur électromécanique, chaque impulsion étant adaptée pour placer l'interrupteur dans un état fermé entre deux impulsions et prenant en compte un instant de commande déterminé à partir d'un premier instant secondaire de réception du front montant ou du front descendant de l'optocoupleur, et
- des éléments de mesure du signal d'alimentation alternatif, les éléments de mesure étant configurés pour mesurer une valeur du signal d'alimentation alternatif.

Le dispositif de commande comprend, en outre :
- des premiers éléments de détermination d'un retard en fonction d'un premier instant primaire auquel le circuit de traitement détecte un front montant ou un front descendant sur l'entrée logique du circuit de traitement, et d'un deuxième instant primaire auquel une valeur mesurée par les éléments de mesure atteint ou dépasse une valeur seuil prédéterminée, et
- des deuxièmes éléments de détermination de l'instant de commande, l'instant de commande étant déterminé à partir du premier instant secondaire et du retard déterminé par les premiers éléments de détermination.

Selon des modes de réalisation, les instants peuvent également être déterminés sous forme d'intervalle de temps à partir d'une référence, par exemple par un compteur. En particulier, le deuxième instant primaire peut être déterminé sous forme d'un intervalle entre le premier instant primaire et le second instant primaire, un compteur pouvant par exemple être démarré au moment du premier instant primaire et stoppé au deuxième instant primaire.

Selon un mode de réalisation, les éléments de couplage comprennent, en outre, un conducteur de phase et un conducteur de neutre, les conducteurs de phase et de neutre étant alimentés électriquement par le signal d'alimentation alternatif, et en ce que la charge est un moteur électrique, le moteur électrique comprenant un stator, le stator comprenant deux enroulements, les deux enroulements comprenant chacun une extrémité commune de sorte à les relier électriquement ensemble, l'extrémité commune étant reliée électriquement au conducteur de neutre par l'intermédiaire de l'interrupteur, chacun des deux enroulements comprenant une autre extrémité constituant respectivement une première borne de phase et une deuxième borne de phase, la première borne de phase étant reliée électriquement à la deuxième borne de phase par l'intermédiaire d'un condensateur de déphasage, le conducteur de phase étant sélectivement soit raccordé électriquement à la première borne de phase pour commander l'entrainement en rotation du moteur électrique dans un premier sens, soit raccordé électriquement à la deuxième borne de phase pour commander l'entrainement en rotation du moteur électrique dans un deuxième sens, le deuxième sens étant opposé au premier sens.

Selon des modes de réalisation, les éléments de détection comprennent des troisièmes éléments de détermination d'un état de conduction d'une diode dans laquelle traverse un courant dérivé du signal d'alimentation alternatif, et en ce que l'optocoupleur est configuré pour détecter le courant traversant la diode et émettre un front montant ou un front descendant sur une entrée logique du circuit de traitement lorsque la valeur du courant franchit une valeur seuil de conduction de la diode à un instant où le signal d'alimentation alternatif est sensiblement égal à zéro.

Selon des modes de réalisation, les éléments de commande sont configurés pour émettre au moins une série d'impulsion, chaque impulsion de la série d'impulsions étant émises en synchronisme avec l'instant de commande.

Selon des modes de réalisation, les éléments de mesure comprennent un pont diviseur de tension résistif, le pont diviseur de tension résistif étant relié électriquement d'une part au signal d'alimentation alternatif et d'autre part à une entrée de mesure du circuit de traitement, le pont diviseur étant configuré pour adapter le signal d'alimentation alternatif à l'entrée de mesure du circuit de traitement.

Selon des modes de réalisation, les premiers éléments de détermination comprennent un compteur de temps intégré au circuit de traitement, le compteur de temps étant initié au premier instant primaire, puis stoppé au deuxième instant primaire.

Selon des modes de réalisation, les deuxièmes éléments de détermination comprennent au moins une donnée enregistrée dans une mémoire du circuit de traitement, la donnée enregistrée comprenant une valeur d'une période de temps caractéristique du signal d'alimentation alternatif pour passer d'une valeur nulle à la valeur seuil prédéterminée.

Des modes de réalisation peuvent également concerner un procédé de commande d'un interrupteur pour un actionneur électromécanique, l'actionneur électromécanique comprenant un dispositif de commande conforme à celui décrit précédemment, le procédé comprenant au moins :
- une première étape primaire de détection d'un front montant ou d'un front descendant sur l'entrée logique du circuit de traitement déterminant un premier instant primaire ;
- une deuxième étape primaire de détection de l'atteinte ou du dépassement d'une valeur seuil par une valeur mesurée par les éléments de mesure déterminant un deuxième instant primaire ;
- une troisième étape primaire de détermination d'une valeur de retard à partir du premier instant primaire et du deuxième instant primaire ;
- une première étape secondaire de détection d'un front montant ou d'un front descendant sur l'entrée logique du circuit de traitement déterminant un premier instant secondaire ;
- une deuxième étape secondaire de détermination d'un instant de commande de l'interrupteur à partir du premier instant secondaire et de la valeur de retard déterminée par la troisième étape primaire ; et
- une troisième étape secondaire de commande de l'interrupteur à partir de l'instant de commande déterminé par la deuxième étape secondaire.

Selon des modes de réalisation, la troisième étape primaire comprend :
- une première sous-étape primaire de détermination d'un troisième instant primaire à partir du deuxième instant primaire, le troisième instant primaire étant calculé à partir d'une période de temps caractéristique du signal d'alimentation alternatif pour passer d'une valeur nulle à la valeur de seuil ;
- une deuxième sous-étape primaire de détermination du retard comme une différence entre le troisième instant primaire et du premier instant primaire.

Selon des modes de réalisation, les étapes primaires du procédé sont mises en œuvre lorsque l'interrupteur est placé dans un état ouvert et/ou lorsque la charge électrique n'est pas alimentée électriquement par le signal d'alimentation alternatif.

Selon des modes de réalisation, les étapes primaires du procédé sont répétées un nombre n entier de fois et en ce que la valeur de l'instant de commande correspond à une valeur moyenne des valeurs des instants de commande déterminés à chaque répétition des étapes primaires.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
La figure 1 représente un schéma général d'un actionneur comprenant un dispositif de commande selon un mode de réalisation de l'invention.
La figure 2 représente un schéma détaillé d'un actionneur comprenant un dispositif de commande selon un mode de réalisation de l'invention.
La figure 3 représente un organigramme d'un procédé selon un mode de réalisation de l'invention.
La figure 4 représente un chronogramme du signal de sortie d'un optocoupleur du dispositif de commande, de la mesure du signal d'alimentation alternatif du dispositif de commande réalisé par des éléments de mesure et du signal de commande d'un interrupteur.

### Description détaillée

La présente invention trouve son application dans tout type d'actionneur électromécanique tel qu'un dispositif de fermeture, d'occultation et/ou de protection solaire, par exemple un store motorisé, ou un dispositif de chauffage et/ou de ventilation et/ou de climatisation.

L'actionneur électromécanique ACT est configuré pour être alimenté électriquement par un réseau électrique de distribution d'un signal d'alimentation alternatif U0 passant périodiquement par zéro appelé couramment « secteur », le signal d'alimentation alternatif U0 pouvant être par exemple de type 230 V - 50 Hz. L'actionneur électromécanique ACT comporte typiquement une charge adaptée pour être alimentée électriquement par le signal d'alimentation alternatif U0, la charge étant disposée en série avec un interrupteur formé par un élément semiconducteur bidirectionnel commandé.

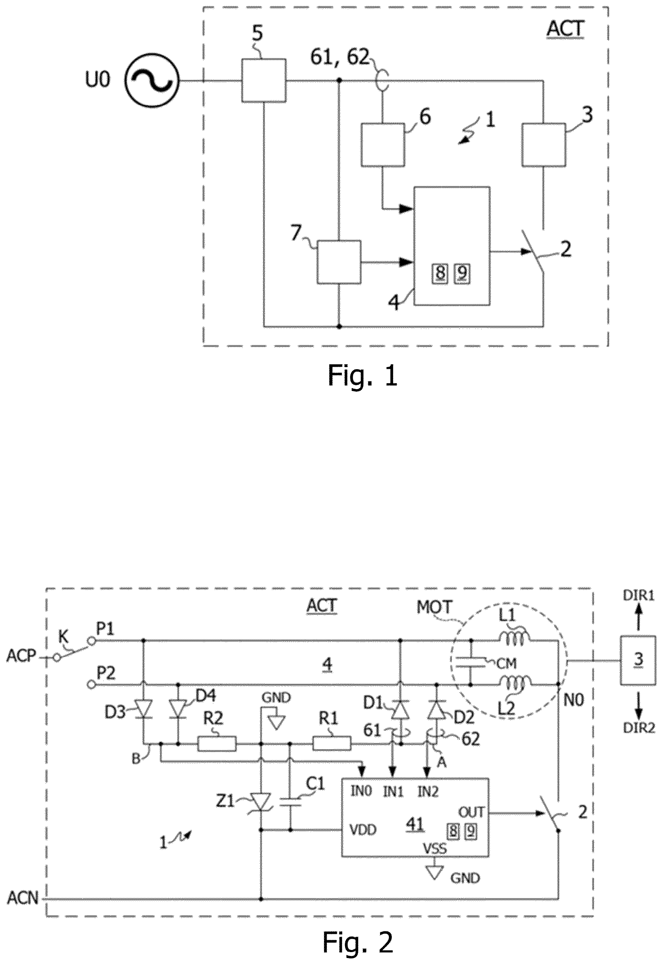

La figure 1 représente un dispositif de commande 1 d'un interrupteur 2 formé par un élément semiconducteur bidirectionnel commandé, le dispositif de commande 1 pouvant être utilisé dans un actionneur électromécanique ACT selon un premier mode de réalisation.

Le dispositif de commande 1 comporte une charge 3 disposée en série avec un interrupteur 2. La charge 3 est adaptée pour être alimentée électriquement par le signal d'alimentation alternatif U0.

L'interrupteur 2 est formé par un élément semiconducteur bidirectionnel commandé tel qu'un triac ou deux thyristors montés tête-bêche.

Le dispositif de commande 1 comprend, en outre, des éléments de couplage 5. Les éléments de couplage 5 comprennent l'interrupteur 2 et sont configurés pour coupler le signal d'alimentation alternatif U0 à la charge 3.

Le dispositif de commande 1 comprend, en outre, des éléments de détection 6 d'un instant de passage par zéro du signal d'alimentation alternatif U0. Les éléments de détection 6 comprennent un optocoupleur 61 (appelé également photocoupleur), l'optocoupleur 61 étant configuré pour émettre un front montant ou un front descendant sur une entrée logique IN1 d'un circuit de traitement 41 lorsque le signal d'alimentation alternatif U0 est sensiblement égal à zéro.

Le dispositif de commande 1 comprend, en outre, des éléments de commande 4 de l'interrupteur 2, les éléments de commande 4 comprenant le circuit de traitement 41 et étant configurés pour émettre des impulsions de commande sur une borne de commande de l'interrupteur 2 à la suite d'une réception d'un ordre de commande de l'actionneur électromécanique ACT, chaque impulsion étant adaptée pour placer l'interrupteur 2 dans un état fermé entre deux impulsions et prenant en compte un instant de commande tc déterminé à partir d'un premier instant secondaire ts1 de réception du front montant ou du front descendant de l'optocoupleur.

Avantageusement, les éléments de commande 4 sont configurés pour émettre au moins une série d'impulsion de commande de l'interrupteur 2, chaque impulsion de la série d'impulsions étant émises en synchronisme avec l'instant de commande tc.

Avantageusement, le circuit de traitement 41 comprend un processeur ou un microcontrôleur, et au moins une mémoire, la mémoire pouvant être interne ou externe au processeur ou microcontrôleur.

Avantageusement, le dispositif de commande 1 peut en outre être pilotée par un circuit de réception d'ordres à distance non représenté, tel que par exemple un récepteur d'ordres radioélectriques.

Le dispositif de commande 1 comprend, en outre, des éléments de mesure 7 du signal d'alimentation alternatif U0. Les éléments de mesure 7 sont configurés pour mesurer une valeur du signal d'alimentation alternatif U0.

Avantageusement, les éléments de mesure 7 comprennent un pont diviseur de tension résistif, le pont diviseur de tension résistif étant relié électriquement d'une part au signal d'alimentation alternatif U0 et d'autre part à une entrée de mesure IN0 du circuit de traitement 41, le pont diviseur étant configuré pour adapter le signal d'alimentation alternatif U0 à l'entrée de mesure IN0 du circuit de traitement 41.

Le dispositif de commande 1 comprend, en outre, des premiers éléments de détermination 8 d'un retard T1 en fonction d'un premier instant primaire tp1 auquel le circuit de traitement 41 détecte un front montant ou un front descendant sur l'entrée logique IN1, IN2 du circuit de traitement 41, et d'un deuxième instant primaire tp2 auquel une valeur mesurée par les éléments de mesure 7 atteint ou dépasse une valeur seuil VS prédéterminée.

Avantageusement, les premiers éléments de détermination 8 comprennent un compteur de temps intégré au circuit de traitement 41, le compteur de temps étant initié au premier instant primaire tp1, puis stoppé au deuxième instant primaire tp2.

Le dispositif de commande 1 comprend, en outre, des deuxièmes éléments de détermination 9 de l'instant de commande tc, l'instant de commande tc étant déterminé à partir du premier instant secondaire ts1 et du retard T1 déterminé par les premiers éléments de détermination 8.

Avantageusement, les deuxièmes éléments de détermination 9 comprennent au moins une donnée enregistrée dans une mémoire du circuit de traitement 41, la donnée enregistrée comprenant une valeur d'une période de temps caractéristique du signal d'alimentation alternatif U0 pour passer d'une valeur nulle à la valeur seuil VS.

Dans un deuxième mode de réalisation de l'invention, représenté à la figure 2, les éléments analogues à ceux du premier mode de réalisation portent les mêmes références et fonctionnent comme expliqué ci-dessus. Dans ce qui suit, on décrit principalement, que ce qui distingue ce deuxième mode de réalisation du premier mode de réalisation. Dans ce qui suit, lorsqu'un signe de référence est utilisé dans la description sans être reproduit sur la figure 2 ou reproduit sur la figure 2 sans être mentionné dans la description, il correspond à l'objet portant la même référence sur la figure 1.

On décrit maintenant en référence à la figure 2, un dispositif de commande 1 selon le deuxième mode de réalisation de l'invention, dans lequel la charge 3 est un moteur électrique MOT de type asynchrone monophasé à condensateur permanent.

Ici, les éléments de couplage 5 comprennent, en outre, un conducteur de phase ACP et un conducteur de neutre ACN. Les conducteurs de phase ACP et de neutre ACN sont alimentés électriquement par le signal d'alimentation alternatif U0.

Ici, la charge 3 est un moteur électrique MOT, le moteur électrique MOT comprenant un stator, le stator comprenant deux enroulements L1, L2. Les deux enroulements comprennent chacun une extrémité commune N0 de sorte à les relier électriquement ensemble, l'extrémité commune N0 étant reliée électriquement au conducteur de neutre ACN par l'intermédiaire de l'interrupteur 2, chacun des deux enroulements L1, L2 comprenant une autre extrémité constituant respectivement une première borne de phase P1 et une deuxième borne de phase P2, la première borne de phase P1 étant reliée électriquement à la deuxième borne de phase P2 par l'intermédiaire d'un condensateur de déphasage CM, le conducteur de phase ACP étant sélectivement soit raccordé électriquement à la première borne de phase P1 pour commander l'entrainement en rotation du moteur électrique MOT dans un premier sens DIR1, soit raccordé électriquement à la deuxième borne de phase P2 pour commander l'entrainement en rotation du moteur électrique MOT dans un deuxième sens DIR2, le deuxième sens DIR2 étant opposé au premier sens DIR1.

Ici, le dispositif de commande 1 comprend, en outre, un commutateur K. Le commutateur K présente au moins deux positions fermées dans lesquelles le conducteur de phase ACP est connecté électriquement à l'une ou l'autre des deux bornes de phase P1, P2. Le commutateur K peut être à commande manuelle, ou être commandé par une bobine de relais pouvant elle-même être pilotée par un circuit de réception d'ordres à distance non représenté, tel que par exemple un récepteur d'ordres radioélectriques. Le commutateur K peut, en outre, présenter une troisième position ouverte en addition des deux positions fermées, dans laquelle le conducteur de phase ACP est déconnecté électriquement des deux bornes de phase P1, P2. Le commutateur K peut éventuellement ne pas faire partie de l'actionneur électromécanique ACT.

Ici, selon que le commutateur K est présenté soit dans la première position fermée, soit dans la deuxième position fermée, le conducteur de phase ACP est sélectivement raccordé électriquement soit à la première borne de phase P1 pour commander l'entrainement en rotation du moteur électrique MOT dans un premier sens DIR1, soit à la deuxième borne de phase P2 pour commander l'entrainement en rotation du moteur électrique MOT dans un deuxième sens DIR2, le deuxième sens DIR2 étant opposé au premier sens DIR1.

Avantageusement, le dispositif de commande 1 comprend, en outre un circuit résistif CR, une première diode D1 et une deuxième diode D2. Le circuit résistif CR comprend une première résistance R1, une diode Zener Z1, et un condensateur C1. La première diode D1 et la deuxième diode D2 sont reliées électriquement ensemble par une électrode de même nature à une extrémité A de la première résistance R1, l'autre électrode de chaque diode D1, D2 étant respectivement reliée à la première borne de phase P1 et à la deuxième borne de phase P2. L'autre extrémité de la première résistance R1 constitue une masse électrique GND flottante du dispositif de commande 1. La masse électrique GND flottante est reliée électriquement au conducteur de neutre ACN par l'intermédiaire de la diode Zener Z1 et du condensateur C1 connectés électriquement en parallèle. Le circuit de traitement 41 est alimenté électriquement par une tension électrique présente aux bornes de la diode Zener Z1 et du condensateur C1, entre le conducteur de neutre ACN relié électriquement à une borne d'alimentation positive VDD du circuit de traitement 41, et la masse électrique GND flottante du dispositif de commande 1 reliée électriquement à une borne d'alimentation négative VSS du circuit de traitement 41. Le détail de l'alimentation électrique du circuit de traitement 41, qui comprend des composants abaisseurs et régulateurs de tension électrique, n'est pas représenté sur les figures.

Ici, la première diode D1 et la deuxième diode D2 sont reliées électriquement ensemble par leur anode respective à une extrémité A de la première résistance R1, la cathode de la première diode D1 est reliée à la première borne de phase P1, et la cathode de la deuxième diode D2 est reliée électriquement à la deuxième borne de phase P2.

Avantageusement, les éléments de détection 6 comprennent un premier optocoupleur 61 et un deuxième optocoupleur 62, le premier optocoupleur 61 et le deuxième optocoupleur 62 étant insérés dans le dispositif de commande 1 pour détecter un courant circulant dans la première diode D1 et dans la deuxième diode D2. Une sortie du premier optocoupleur 61 est reliée électriquement à une première entrée logique IN1 du circuit de traitement 41, et une sortie du deuxième optocoupleur 62 est reliée électriquement à une deuxième entrée logique IN2 du circuit de traitement 41. Chaque optocoupleur 61, 62 fait passer l'entrée logique IN1, IN2 correspondante à l'état haut lorsque la diode correspondante conduit. Le circuit de traitement 41 est ainsi en mesure d'identifier l'état de conduction ou de blocage de la première diode D1 et de la deuxième diode D2.

L'intérêt principal de ce montage est que, à moteur arrêté, lorsque le conducteur de phase ACP est relié électriquement à la première borne de phase P1, l'instant de début de conduction de la première diode D1, et donc d'apparition d'un front montant sur l'entrée logique IN1, correspond à l'instant auquel le signal d'alimentation alternatif U0 est sensiblement égal à zéro en passant d'une alternance positive à une alternance négative, autrement dit au passage à zéro du signal d'alimentation alternatif U0 lors du passage d'une alternance positive à une alternance négative. L'instant de fin de conduction de la première diode D1, et donc d'apparition d'un front descendant sur l'entrée logique IN1, correspond à l'instant auquel le signal d'alimentation alternatif U0 est sensiblement égal à zéro en passant d'une alternance négative à une alternance positive, autrement dit au passage à zéro du signal d'alimentation alternatif U0 lors du passage d'une alternance négative à une alternance positive.

De même, lorsque le conducteur de phase ACP est relié électriquement à la deuxième borne de phase P2, l'instant de début de conduction de la deuxième diode D2, et donc d'apparition d'un front montant sur l'entrée logique IN2, correspond à l'instant auquel le signal d'alimentation alternatif U0 est sensiblement égal à zéro en passant d'une alternance positive à une alternance négative, autrement dit au passage à zéro du signal d'alimentation alternatif U0 lors du passage d'une alternance positive à une alternance négative. L'instant de fin de conduction de la deuxième diode D2, et donc d'apparition d'un front descendant sur l'entrée logique IN2, correspond à l'instant auquel le signal d'alimentation alternatif U0 est sensiblement égal à zéro en passant d'une alternance négative à une alternance positive, autrement dit au passage à zéro du signal d'alimentation alternatif U0 lors du passage d'une alternance négative à une alternance positive.

Ici, les éléments de mesure 7 comprennent une troisième diode D3, une quatrième diode D4, et un pont diviseur de tension résistif constitué d'au moins une deuxième résistance R2. La troisième diode D3 et la quatrième diode D4 sont reliées électriquement ensemble par une électrode de même nature à une extrémité B de la deuxième résistance R2, l'autre électrode de chaque diode D3, D4 étant respectivement reliée à la première borne de phase P1 et à la deuxième borne de phase P2. L'autre extrémité de la deuxième résistance R2 est reliée électriquement à la masse électrique GND flottante du dispositif de commande 1. L'extrémité B de la deuxième résistance R2 est reliée électriquement à une entrée de mesure IN0 du circuit de traitement 41. Ainsi, le circuit de traitement 41 est adapté pour mesurer une valeur du signal d'alimentation alternatif U0 en mesurant une tension électrique aux bornes de la deuxième résistance R2.

Ici, la troisième diode D3 et la quatrième diode D4 sont reliées électriquement ensemble par leur cathode respective à l'extrémité B de la deuxième résistance R2, l'anode de la troisième diode D3 est reliée à la première borne de phase P1, et l'anode de la quatrième diode D4 est reliée électriquement à la deuxième borne de phase P2. Les diodes D1 et D3 fonctionnent ici en opposition, de même que les diodes D2 et D4.

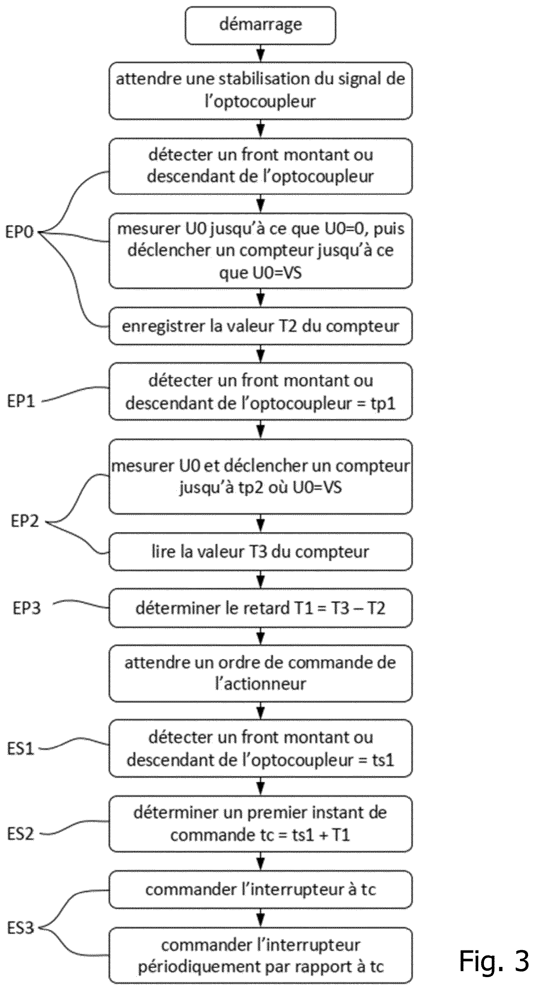

La figure 3 illustre des étapes d'un procédé de commande d'un interrupteur 2, selon un mode de réalisation. Le procédé de commande est mis en œuvre par le circuit de traitement 41.

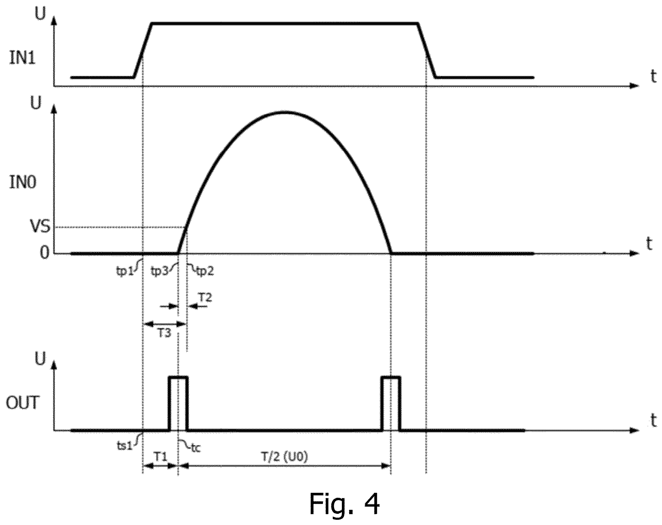

Les étapes du procédé de commande sont décrites dans ce qui suit, en correspondance avec la figure 4 qui représente un chronogramme temporel du signal de détection de l'optocoupleur 61, 62 détecté par les éléments de détection 6, du signal d'alimentation alternatif U0, du signal de commande de l'interrupteur 2 généré par les éléments de commande 4, et du signal présent aux bornes de la deuxième résistance R2 mesuré par les éléments de mesure 7. Ce cas permet d'illustrer le procédé de commande mis en œuvre pour un dispositif de commande conforme à un mode de réalisation.

Avantageusement, les étapes primaires du procédé sont mises en œuvre lorsque l'interrupteur 2 est placé dans un état ouvert et/ou lorsque la charge électrique 3 n'est pas alimentée électriquement par le signal d'alimentation alternatif U0.

Le procédé comprend une première série d'étapes primaires EP et une deuxième série d'étape secondaires ES, la première série d'étapes étant réalisées en amont de la deuxième série d'étapes. Le retard T1 existant entre un front montant ou descendant de l'optocoupleur et le réel zéro secteur est déterminé par la première série d'étapes afin de pouvoir être utilisé dans la deuxième série d'étapes pour commander l'interrupteur 2 suite à la réception d'un ordre de commande de l'actionneur électromécanique ACT.

Le procédé comprend une étape primaire EP0 de détermination d'une période de temps T2 caractéristique du signal d'alimentation alternatif U0 pour passer d'une valeur nulle à la valeur de seuil VS.

Avantageusement, la période de temps T2 peut être mesurée par l'intermédiaire des éléments de mesure 7, ou prédéterminée dans une mémoire du circuit de traitement 41 lorsque la valeur du signal d'alimentation alternatif U0 est considérée fixe et stabilisée.

Avantageusement, l'étape primaire EP0 est mise en œuvre lorsque circuit de traitement 41 détermine que le signal reçu de l'optocoupleur 61, 62 est stabilisé, par exemple lorsque l'intervalle entre chaque front montant ou front descendant reçu sur l'entrée logique IN1, IN2 est déterminé constant pendant une durée prédéterminée correspondant à un nombre prédéterminé de front montant ou descendant reçu sur l'entrée logique IN1, IN2.

Le procédé comprend, en outre, une première étape primaire EP1 de détection d'un front montant ou d'un front descendant sur l'entrée logique IN1, IN2 du circuit de traitement 41 déterminant un premier instant primaire tp1.

Le procédé comprend, en outre, une deuxième étape primaire EP2 de détection de l'atteinte ou du dépassement d'une valeur seuil VS par une valeur mesurée par les éléments de mesure 7 déterminant un deuxième instant primaire tp2 et/ou une période de temps T3 correspondant à un intervalle de temps entre le premier instant primaire tp1 et le deuxième instant primaire tp2, le deuxième instant primaire tp2 étant situé après le premier instant primaire tp1.

Le procédé comprend, en outre, une troisième étape primaire EP3 de détermination d'une valeur d'un retard T1 à partir du premier instant primaire tp1 et du deuxième instant primaire tp2, ou à partir de la période de temps T2 et de la période de temps T3, la période de temps correspondant au retard T1 précédant la période de temps T2, la période de temps T3 s'écoulant en parallèle de la période de temps T1 et/ou de la période de temps T2.

Avantageusement, la troisième étape primaire EP3 comprend au moins une première sous-étape primaire EP32 de détermination d'un troisième instant primaire tp3 à partir du deuxième instant primaire tp2, le troisième instant primaire tp3 étant calculé à partir de la période de temps T2 caractéristique du signal d'alimentation alternatif U0 pour passer d'une valeur nulle à la valeur de seuil VS, et une deuxième sous-étape primaire EP33 de détermination du retard T1 comme une différence entre le troisième instant primaire tp3 et le premier instant primaire tp1, ou d'une différence entre la période de temps T3 et la période de temps T2. Le troisième instant primaire tp3 est situé entre le premier instant primaire tp1 et le deuxième instant primaire tp2, le deuxième instant primaire tp2 étant situé après le premier instant primaire tp1. La valeur de seuil VS peut être par exemple fixée à 100 mV pour limiter le risque de fausse mesure sur l'entrée de mesure IN0 du circuit de traitement 41.

Le procédé comprend, en outre, une première étape secondaire ES1 de détection d'un front montant ou d'un front descendant sur l'entrée logique du circuit de traitement déterminant un premier instant secondaire ts1.

Le procédé comprend, en outre, une deuxième étape secondaire ES2 de détermination d'un instant de commande tc de l'interrupteur à partir du premier instant secondaire ts1 et de la valeur de retard T1 déterminée par la troisième étape primaire EP3.

Le procédé comprend, en outre, une troisième étape secondaire ES3 de commande de l'interrupteur 2 à partir de l'instant de commande tc déterminé par la deuxième étape secondaire ES2.

Selon un exemple de réalisation illustré par les figures 3 et 4, l'actionneur électromécanique ACT est un store motorisé alimenté par un signal d'alimentation alternatif U0 de type 230 V - 50 Hz.

On admet comme conditions initiales que le dispositif de commande 1 est mis sous tension lors d'une étape d'initialisation de l'actionneur électromécanique ACT, par exemple lors de la mise sous tension de l'actionneur électromécanique ACT. La charge 3 de l'actionneur électromécanique ACT est initialement à l'arrêt et non alimentée électriquement, autrement dit immobile, et aucun ordre de commande n'est reçu par l'actionneur électromécanique ACT. Tel qu'illustré à la figure 4, chaque front montant reçu sur l'entrée logique IN1 du circuit de traitement 41 correspond ici au passage par zéro du signal d'alimentation alternatif U0 lors du passage d'une alternance négative à une alternance positive du signal d'alimentation alternatif U0.

Le circuit de traitement 41 analyse le signal de l'optocoupleur 61 sur un intervalle de temps comprenant quatre apparitions de fronts montants de l'optocoupleur 61, et détermine que le signal de l'optocoupleur 61 est stabilisé.

Le circuit de traitement 41 met en œuvre l'étape primaire EP0 dans laquelle il détecte une première fois l'apparition d'un front montant sur l'entrée logique IN1 puis mesure la valeur du signal d'alimentation alternatif U0 sur l'entrée de mesure IN0 jusqu'à ce que la valeur mesurée soit nulle, autrement dit égale à zéro. Le circuit de traitement 41 déclenche alors un compteur de temps à l'instant où la valeur mesurée est nulle et continue de mesurer la valeur du signal d'alimentation alternatif U0 sur l'entrée de mesure IN0 jusqu'à ce que la valeur mesurée atteigne la valeur seuil VS, ici 100 mV. Une fois la valeur seuil atteinte, le circuit de traitement 41 stoppe le compteur de temps puis enregistre la valeur de la période de temps T2 mesurée dans une mémoire du circuit de traitement 41. Ici, la valeur de la période de temps T2 enregistrée correspond à une période de temps entre un premier instant où la valeur du signal d'alimentation alternatif U0 est nulle et un deuxième instant où la valeur du signal d'alimentation alternatif U0 à atteint la valeur seuil VS prédéterminée.

Le circuit de traitement 41 met ensuite en œuvre la première étape primaire EP1 dans laquelle il attend l'apparition d'un nouveau front montant sur l'entrée logique IN1 jusqu'à la détection d'un front montant sur l'entrée logique IN1, déterminant ainsi un premier instant primaire tp1.

Suite à la détection du front montant, le circuit de traitement 41 met en œuvre la deuxième étape primaire EP2 dans laquelle il déclenche un compteur de temps à l'instant primaire tp1 et mesure la valeur du signal d'alimentation alternatif U0 sur l'entrée de mesure IN0 jusqu'à l'atteinte de la valeur de seuil VS. Une fois la valeur seuil VS atteinte à un deuxième instant primaire tp2, le circuit de traitement 41 stoppe le compteur de temps puis lit la valeur du compteur de temps correspondant à une période de temps T3.

Le circuit de traitement 41 met ensuite en œuvre la troisième étape primaire EP3 dans laquelle il détermine la valeur du retard T1 par la relation T1 = T3 - T2, la valeur du retard T1 correspondant à un intervalle de temps entre le premier instant primaire tp1 correspondant à l'apparition d'un front montant de l'optocoupleur, et un troisième instant primaire tp3 correspondant à l'instant suivant le premier instant primaire tp1 où la valeur du signal d'alimentation alternatif U0 est nulle, autrement dit au passage par zéro du signal d'alimentation alternatif U0.

Le circuit de traitement 41 se met ensuite en attente d'une réception d'un ordre de commande de l'actionneur électromécanique ACT à la suite duquel il met en œuvre une série d'étape secondaires dans lesquelles il commande l'interrupteur 2 à chaque apparition d'un front montant sur l'entrée logique IN1, chaque impulsion de commande de l'interrupteur 2 étant émise à un instant de commande tc avec le retard T1 déterminé par le circuit de traitement 41.

Il apparaitra clairement à la personne du métier que la présente invention est susceptible de diverses variantes de réalisation et variantes d'application. En particulier, le sens de montage des diodes D1 à D4 est susceptible de multitude de variantes ayant pour effet de modifier la nature du front détecté par l'optocoupleur. De même, les composants formant le circuit résistif du dispositif de commande sont susceptibles de nombreuses variantes.

## Revendications

1. Dispositif de commande (1) d'un interrupteur (2) formé par un élément semiconducteur bidirectionnel commandé pour un actionneur électromécanique (ACT), l'actionneur électromécanique (ACT) comportant une charge (3) disposée en série avec l'interrupteur (2) et adaptée pour être alimentée électriquement par un signal d'alimentation alternatif (U0) passant périodiquement par zéro, le dispositif de commande (1) comprenant, en outre :
- des éléments de couplage (5), les éléments de couplage (5) comprenant l'interrupteur (2) et étant configurés pour coupler le signal d'alimentation alternatif (U0) à la charge (3),
- des éléments de détection (6) d'un instant de passage par zéro du signal d'alimentation alternatif (U0), les éléments de détection (6) comprenant au moins un optocoupleur (61, 62), l'optocoupleur (61, 62) étant configuré pour émettre un front montant ou un front descendant sur une entrée logique (IN1, IN2) d'un circuit de traitement (41) lorsque le signal d'alimentation alternatif (U0) est sensiblement égal à zéro,
- des éléments de commande (4) de l'interrupteur (2), les éléments de commande de l'interrupteur (2) comprenant le circuit de traitement (41) et étant configurés pour émettre des impulsions de commande sur une borne de commande de l'interrupteur (2) à la suite d'une réception d'un ordre de commande de l'actionneur électromécanique (ACT), chaque impulsion étant adaptée pour placer l'interrupteur (2) dans un état fermé entre deux impulsions et prenant en compte un instant de commande (tc) déterminé à partir d'un premier instant secondaire (ts1) de réception du front montant ou du front descendant de l'optocoupleur (61, 62), et
- des éléments de mesure (7) du signal d'alimentation alternatif (U0), les éléments de mesure (7) étant configurés pour mesurer une valeur du signal d'alimentation alternatif (U0),
**caractérisé en ce que** le dispositif de commande (1) comprend, en outre :
- des premiers éléments de détermination (8) d'un retard (T1) en fonction d'un premier instant primaire (tp1) auquel le circuit de traitement (41) détecte un front montant ou un front descendant sur l'entrée logique (IN1, IN2) du circuit de traitement (41), et d'un deuxième instant primaire (tp2) auquel une valeur mesurée par les éléments de mesure (7) atteint ou dépasse une valeur seuil (VS) prédéterminée, et
- des deuxièmes éléments de détermination (9) de l'instant de commande (tc), l'instant de commande (tc) étant déterminé à partir du premier instant secondaire (ts1) et du retard (T1) déterminé par les premiers éléments de détermination (8).

2. Dispositif de commande selon la revendication 1, **caractérisé en ce que** les éléments de couplage (5) comprennent, en outre, un conducteur de phase (ACP) et un conducteur de neutre (ACN), les conducteurs de phase (ACP) et de neutre (ACN) étant alimentés électriquement par le signal d'alimentation alternatif (U0), et **en ce que** la charge (3) est un moteur électrique (MOT), le moteur électrique (MOT) comprenant un stator, le stator comprenant deux enroulements (L1, L2), les deux enroulements (L1, L2) comprenant chacun une extrémité commune (N0) de sorte à les relier électriquement ensemble, l'extrémité commune (N0) étant reliée électriquement au conducteur de neutre (ACN) par l'intermédiaire de l'interrupteur (2), chacun des deux enroulements (L1, L2) comprenant une autre extrémité constituant respectivement une première borne de phase (P1) et une deuxième borne de phase (P2), la première borne de phase (P1) étant reliée électriquement à la deuxième borne de phase (P2) par l'intermédiaire d'un condensateur de déphasage (CM), le conducteur de phase (ACP) étant sélectivement soit raccordé électriquement à la première borne de phase (P1) pour commander l'entrainement en rotation du moteur électrique (MOT) dans un premier sens (DIR1), soit raccordé électriquement à la deuxième borne de phase (P2) pour commander l'entrainement en rotation du moteur électrique (MOT) dans un deuxième sens (DIR2), le deuxième sens (DIR2) étant opposé au premier sens (DIR1).

3. Dispositif de commande (1) selon la revendication 1 ou selon la revendication 2, **caractérisé en ce que** les éléments de détection (6) comprennent des troisièmes éléments de détermination d'un état de conduction d'une diode (D1, D2) dans laquelle traverse un courant dérivé du signal d'alimentation alternatif (U0), et **en ce que** l'optocoupleur (61, 62) est configuré pour détecter le courant traversant la diode (D1, D2) et émettre un front montant ou un front descendant sur une entrée logique (IN1, IN2) du circuit de traitement (41) lorsque la valeur du courant franchit une valeur seuil de conduction de la diode à un instant où le signal d'alimentation alternatif (U0) est sensiblement égal à zéro.

4. Dispositif de commande (1) selon l'une quelconque des revendications précédentes, **caractérisé en ce que** les éléments de commande (4) sont configurés pour émettre au moins une série d'impulsion, chaque impulsion de la série d'impulsions étant émises en synchronisme avec l'instant de commande (tc).

5. Dispositif de commande (1) selon l'une quelconque des revendications précédentes, **caractérisé en ce que** les éléments de mesure (7) comprennent un pont diviseur de tension résistif, le pont diviseur de tension résistif étant relié électriquement d'une part au signal d'alimentation alternatif (U0) et d'autre part à une entrée de mesure (INO) du circuit de traitement (41), le pont diviseur étant configuré pour adapter le signal d'alimentation alternatif (U0) à l'entrée de mesure (INO) du circuit de traitement (41).

6. Dispositif de commande (1) selon l'une quelconque des revendications précédentes, **caractérisé en ce que** les premiers éléments de détermination (8) comprennent un compteur de temps intégré au circuit de traitement (41), le compteur de temps étant initié au premier instant primaire (tp1), puis stoppé au deuxième instant primaire (tp2).

7. Dispositif de commande (1) selon l'une quelconque des revendications précédentes, **caractérisé en ce que** les deuxièmes éléments de détermination (9) comprennent au moins une donnée enregistrée dans une mémoire du circuit de traitement (41), la donnée enregistrée comprenant une valeur d'une période de temps (T2) caractéristique du signal d'alimentation alternatif (U0) pour passer d'une valeur nulle à la valeur seuil prédéterminée (VS).

8. Procédé de commande d'un interrupteur (2) pour un actionneur électromécanique (ACT), l'actionneur électromécanique (ACT) comprenant un dispositif de commande (1) conforme à l'une quelconque des revendications 1 à 7, caractérisé en ce le procédé comprend au moins :
- une première étape primaire (EP1) de détection d'un front montant ou d'un front descendant sur l'entrée logique (IN1, IN2) du circuit de traitement (41) déterminant un premier instant primaire (tp1) ;
- une deuxième étape primaire (EP2) de détection de l'atteinte ou du dépassement d'une valeur seuil (VS) par une valeur mesurée par les éléments de mesure (7) déterminant un deuxième instant primaire (tp2) ;
- une troisième étape primaire (EP3) de détermination d'une valeur de retard (T1) à partir du premier instant primaire (tp1) et du deuxième instant primaire (tp2) ;
- une première étape secondaire (ES1) de détection d'un front montant ou d'un front descendant sur l'entrée logique (IN1, IN2) du circuit de traitement (41) déterminant un premier instant secondaire (tp2) ;
- une deuxième étape secondaire (ES2) de détermination d'un instant de commande (tc) de l'interrupteur (2) à partir du premier instant secondaire (ts1) et de la valeur de retard (T1) déterminée par la troisième étape primaire (EP3) ; et
- une troisième étape secondaire (ES3) de commande de l'interrupteur (2) à partir de l'instant de commande (tc) déterminé par la deuxième étape secondaire (ES2).

9. Procédé de commande selon la revendication 8, dans lequel la troisième étape primaire (EP3) comprend :
- une première sous-étape primaire (EP31) de détermination d'un troisième instant primaire (tp3) à partir du deuxième instant primaire (tp2), le troisième instant primaire (tp3) étant calculé à partir d'une période de temps (T2) caractéristique du signal d'alimentation alternatif (U0) pour passer d'une valeur nulle à la valeur de seuil (VS) ;
- une deuxième sous-étape primaire (EP32) de détermination du retard (T1) comme une différence entre le troisième instant primaire (tp3) et du premier instant primaire (tp1).

10. Procédé de commande selon la revendication 8, **caractérisé en ce que** les étapes primaires du procédé sont mises en œuvre lorsque l'interrupteur (2) est placé dans un état ouvert et/ou lorsque la charge électrique (3) n'est pas alimentée électriquement par le signal d'alimentation alternatif (U0).

11. Procédé de commande selon l'une quelconque des revendications 7 à 10, **caractérisé en ce que** les étapes primaires du procédé sont répétées un nombre n entier de fois et **en ce que** la valeur de l'instant de commande (tc) correspond à une valeur moyenne des valeurs des instants de commande déterminés à chaque répétition des étapes primaires.

## Patentansprüche

1. Steuervorrichtung (1) eines Schalters (2), der aus einem für einen elektromechanischen Aktuator (ACT) gesteuerten bidirektionalen Halbleiterelement gebildet wird, wobei der elektromechanische Aktuator (ACT) eine Last (3) aufweist, die in Reihe mit dem Schalter (2) angeordnet und so ausgelegt ist, dass sie durch ein periodisch durch Null fließendes Wechselstromversorgungssignal (U0) mit Strom versorgt wird, wobei die Steuervorrichtung (1) ferner Folgendes umfasst:
- Kopplungselemente (5), wobei die Kopplungselemente (5) den Schalter (2) umfassen und so eingerichtet sind, dass sie das Wechselstromversorgungssignal (U0) mit der Last (3) koppeln,
- Detektionselemente (6) eines Zeitpunkts des Nulldurchgangs des Wechselstromversorgungssignals (U0), wobei die Detektionselemente (6) mindestens einen Optokoppler (61, 62) umfassen, wobei der Optokoppler (61, 62) so eingerichtet ist, dass er eine steigende Flanke oder eine fallende Flanke an einem logischen Eingang (IN1, IN2) einer Verarbeitungsschaltung (41) ausgibt, wenn das Wechselstromversorgungssignal (U0) im Wesentlichen gleich Null ist,
- Steuerelemente (4) des Schalters (2), wobei die Steuerelemente des Schalters (2) die Verarbeitungsschaltung (41) umfassen und so eingerichtet sind, dass sie infolge eines Empfangs eines Steuerbefehls des elektromechanischen Aktuators (ACT) Steuerimpulse an eine Steuerklemme des Schalters (2) ausgeben, wobei jeder Impuls so ausgelegt ist, dass er den Schalter (2) zwischen zwei Impulsen in einen geschlossenen Zustand versetzt, und einen Steuerzeitpunkt (tc) berücksichtigt, der ausgehend von einem ersten sekundären Zeitpunkt (ts1) des Empfangs der steigenden Flanke oder der fallenden Flanke des Optokopplers (61, 62) bestimmt wird, und
- Messelemente (7) des Wechselstromversorgungssignals (U0), wobei die Messelemente (7) so eingerichtet sind, dass sie einen Wert des Wechselstromversorgungssignals (U0) messen,
**dadurch gekennzeichnet, dass** die Vorrichtung (100, 200) ferner Folgendes umfasst:
- erste Bestimmungselemente zur Bestimmung (8) einer Verzögerung (T1) in Abhängigkeit von einem ersten primären Zeitpunkt (tp1), zu dem die Verarbeitungsschaltung (41) eine steigende Flanke oder eine fallende Flanke am logischen Eingang (IN1, IN2) der Verarbeitungsschaltung (41) detektiert, und eines zweiten primären Zeitpunkts (tp2), zu dem ein von den Messelementen (7) gemessener Wert einen vorbestimmten Schwellenwert (VS) erreicht oder überschreitet, und
- zweite Bestimmungselemente zur Bestimmung (9) des Steuerzeitpunkts (tc), wobei der Steuerzeitpunkt (tc) ausgehend von dem ersten sekundären Zeitpunkt (ts1) und der von den ersten Bestimmungselementen (8) bestimmten Verzögerung (T1) bestimmt wird.

2. Steuervorrichtung nach Anspruch 1, **dadurch gekennzeichnet, dass** die Kopplungselemente (5) ferner einen Phasenleiter (ACP) und einen Neutralleiter (ACN) umfassen, wobei der Phasenleiter (ACP) und der Neutralleiter (ACN) über das Wechselstromversorgungssignal (U0) mit Strom versorgt werden, und dass die Last (3) ein Elektromotor (MOT) ist, wobei der Elektromotor (MOT) einen Stator umfasst, wobei der Stator zwei Wicklungen (L1, L2) umfasst, wobei die beiden Wicklungen (L1, L2) jeweils ein gemeinsames Ende (N0) umfassen, so dass sie elektrisch miteinander verbunden sind, wobei das gemeinsame Ende (N0) über den Schalter (2) elektrisch mit dem Neutralleiter (ACN) verbunden ist, wobei jede der beiden Wicklungen (L1, L2) ein anderes Ende umfasst, das jeweils eine erste Phasenklemme (P1) und eine zweite Phasenklemme (P2) bildet, wobei die erste Phasenklemme (P1) über einen Phasenverschiebungskondensator (CM) elektrisch mit der zweiten Phasenklemme (P2) verbunden ist, wobei der Phasenleiter (ACP) selektiv entweder elektrisch an die erste Phasenklemme (P1) angeschlossen ist, um den Drehantrieb des Elektromotors (MOT) in einer ersten Richtung (DIR1) zu steuern, oder elektrisch an die zweite Phasenklemme (P2) angeschlossen ist, um den Drehantrieb des Elektromotors (MOT) in einer zweiten Richtung (DIR2) zu steuern, wobei die zweite Richtung (DIR2) der ersten Richtung (DIR1) entgegengesetzt ist.

3. Steuervorrichtung (1) nach Anspruch 1 oder nach Anspruch 2, **dadurch gekennzeichnet, dass** die Detektionselemente (6) dritte Elemente zur Bestimmung eines Leitfähigkeitszustands einer Diode (D1, D2) umfassen, in der ein vom Wechselstromversorgungssignal (U0) abgeleiteter Strom fließt, und dass der Optokoppler (61, 62) so eingerichtet ist, dass er den Strom, der die Diode (D1, D2) durchfließt, detektiert und eine steigende Flanke oder eine fallende Flanke an einem logischen Eingang (IN1, IN2) der Verarbeitungsschaltung (41) ausgibt, wenn der Stromwert einen Leitfähigkeitsschwellenwert der Diode zu einem Zeitpunkt überschreitet, zu dem das Wechselstromversorgungssignal (U0) im Wesentlichen gleich Null ist.

4. Steuervorrichtung (1) nach einem der vorhergehenden Ansprüche, **dadurch gekennzeichnet, dass** die Steuerelemente (4) so eingerichtet sind, dass sie mindestens eine Impulsreihe aussenden, wobei jeder Impuls der Impulsreihe synchron mit dem Steuerzeitpunkt (tc) ausgesendet wird.

5. Steuervorrichtung (1) nach einem der vorhergehenden Ansprüche, **dadurch gekennzeichnet, dass** die Messelemente (7) eine ohmsche Spannungsteilerbrücke umfassen, wobei die ohmsche Spannungsteilerbrücke einerseits mit dem Wechselstromversorgungssignal (U0) und andererseits mit einem Messeingang (INO) der Verarbeitungsschaltung (41) elektrisch verbunden ist, wobei die Spannungsteilerbrücke so eingerichtet ist, dass sie das Wechselstromversorgungssignal (U0) an den Messeingang (INO) der Verarbeitungsschaltung (41) anpasst.

6. Steuervorrichtung (1) nach einem der vorhergehenden Ansprüche, **dadurch gekennzeichnet, dass** die ersten Bestimmungselemente (8) einen in die Verarbeitungsschaltung (41) integrierten Zeitzähler umfassen, wobei der Zeitzähler am ersten primären Zeitpunkt (tp1) gestartet und dann am zweiten primären Zeitpunkt (tp2) gestoppt wird.

7. Steuervorrichtung (1) nach einem der vorhergehenden Ansprüche, **dadurch gekennzeichnet, dass** die zweiten Bestimmungselemente (9) mindestens ein in einem Speicher der Verarbeitungsschaltung (41) gespeichertes Datum umfassen, wobei das gespeicherte Datum einen Wert einer für das Wechselstromversorgungssignal (U0) charakteristischen Zeitperiode (T2) umfasst, um von einem Nullwert auf den vorbestimmten Schwellenwert (VS) überzugehen.

8. Verfahren zur Steuerung eines Schalters (2) für einen elektromechanischen Aktuator (ACT), wobei der elektromechanische Aktuator (ACT) eine Steuervorrichtung (1) nach einem der Ansprüche 1 bis 7 umfasst, **dadurch gekennzeichnet, dass** das Verfahren mindestens Folgendes umfasst:
- einen ersten primären Schritt (EP1) zum Detektieren einer steigenden Flanke oder einer fallenden Flanke am logischen Eingang (IN1, IN2) der Verarbeitungsschaltung (41), der einen ersten primären Zeitpunkt (tp1) bestimmt;
- einen zweiten primären Schritt (EP2) zum Detektieren des Erreichens oder Überschreitens eines Schwellenwerts (VS) durch einen von den Messelementen (7) gemessenen Wert, der einen zweiten primären Zeitpunkt (tp2) bestimmt;
- einen dritten primären Schritt (EP3) zum Bestimmen eines Werts der Verzögerung (T1) ausgehend von dem ersten primären Zeitpunkt (tp1) und dem zweiten primären Zeitpunkt (tp2);
- einen ersten sekundären Schritt (ES1) zum Detektieren einer steigenden Flanke oder einer fallenden Flanke am logischen Eingang (IN1, IN2) der Verarbeitungsschaltung (41), der einen ersten sekundären Zeitpunkt (tp2) bestimmt;
- einen zweiten sekundären Schritt (ES2) zum Bestimmen eines Steuerzeitpunkts (tc) des Schalters (2) ausgehend vom ersten sekundären Zeitpunkt (ts1) und vom Wert der Verzögerung (T1), der durch den dritten primären Schritt (EP3) bestimmt wurde; und
- einen dritten sekundären Schritt (ES3) zur Steuerung des Schalters (2) ab dem von dem zweiten sekundären Schritt (ES2) bestimmten Steuerzeitpunkt (tc).

9. Steuerungsverfahren nach Anspruch 8, wobei der dritte primären Schritt (EP3) Folgendes umfasst:
- einen ersten primären Unterschritt (EP31) zum Bestimmen eines dritten primären Zeitpunkts (tp3) ausgehend vom zweiten primären Zeitpunkt (tp2), wobei der dritte primäre Zeitpunkt (tp3) ausgehend von einer für das Wechselstromversorgungssignal (U0) charakteristischen Zeitperiode (T2) berechnet wird, um von einem Nullwert zum Schwellenwert (VS) überzugehen;
- einen zweiten primären Unterschritt (EP32) zum Bestimmen der Verzögerung (T1) als Differenz zwischen dem dritten primären Zeitpunkt (tp3) und dem ersten primären Zeitpunkt (tp1).

10. Steuerungsverfahren nach Anspruch 8, **dadurch gekennzeichnet, dass** die primären Schritte des Verfahrens durchgeführt werden, wenn der Schalter (2) in einen geöffneten Zustand gebracht wird und/oder wenn die elektrische Last (3) nicht durch das Wechselstromversorgungssignal (U0) mit Strom versorgt wird.

11. Steuerungsverfahren nach einem der Ansprüche 7 bis 10, **dadurch gekennzeichnet, dass** die primären Schritte des Verfahrens eine ganze Zahl n von Malen wiederholt werden und dass der Wert des Steuerzeitpunkts (tc) einem Mittelwert der Werte der Steuerzeitpunkte entspricht, die bei jeder Wiederholung der primären Schritte bestimmt wurden.

## Claims

1. A control device (1) for a switch (2) formed by a controlled bidirectional semiconductor element for an electromechanical actuator (ACT), the electromechanical actuator (ACT) including a load (3) disposed in series with the switch (2) and adapted to be electrically supplied by an alternating supply signal (U0) that periodically crosses zero, the control device (1) further comprising:
- coupling elements (5), the coupling elements (5) comprising the switch (2) and being configured to couple the alternating supply signal (U0) to the load (3);
- detection elements (6) for detecting a zero-crossing time of the alternating supply signal (U0), the detection elements (6) comprising at least one optocoupler (61, 62), the optocoupler (61, 62) being configured to emit a rising edge or a falling edge to a logic input (IN1, IN2) of a processing circuit (41) when the alternating supply signal (U0) is approximately equal to zero;
- control elements (4) for controlling the switch (2), the control elements (4) for controlling the switch (2) comprising the processing circuit (41) and being configured to emit control pulses to a control terminal of the switch (2) following receipt of a control command of the electromechanical actuator (ACT), each pulse being adapted to set the switch (2) to a closed state between two pulses and taking into account a control time (tc) determined from a first secondary time (ts1) of receipt of the rising edge or of the falling edge from the optocoupler (61, 62), and
- measurement elements (7) for measuring the alternating supply signal (U0), the measurement elements (7) being configured to measure a value of the alternating supply signal (U0),
**characterized in that** the control device (1) further comprises:
- first determination elements (8) for determining a delay (T1) according to a first primary time (tp1) at which the processing circuit (41) detects a rising edge or a falling edge on the logic input (IN1, IN2) of the processing circuit (41), and to a second primary time (tp2) at which a value measured by the measurement elements (7) reaches or exceeds a predetermined threshold value (VS), and
- second determination elements (9) for determining the control time (tc), the control time (tc) being determined from the first secondary time (ts1) and the delay (T1) determined by the first determination elements (8).

2. The control device according to claim 1, **characterized in that** the coupling elements (5) further comprise a phase conductor (ACP) and a neutral conductor (ACN), the phase (ACP) and neutral (ACN) conductors being electrically supplied by the alternating supply signal (U0), and **in that** the load (3) is an electric motor (MOT), the electric motor (MOT) comprising a stator, the stator comprising two windings (L1, L2), the two windings (L1, L2) each comprising a common end (N0) so as to electrically link them together, the common end (N0) being electrically linked to the neutral conductor (ACN) through the switch (2), each of the two windings (L1, L2) comprising another end respectively constituting a first phase terminal (P1) and a second phase terminal (P2), the first phase terminal (P1) being electrically linked to the second phase terminal (P2) through a phase-shift capacitor (CM), the phase conductor (ACP) being selectively either electrically connected to the first phase terminal (P1) to control the rotation of the electric motor (MOT) in a first direction (DIR1), or electrically connected to the second phase terminal (P2) to control the rotation of the electric motor (MOT) in a second direction (DIR2), the second direction (DIR2) being opposite to the first direction (DIR1).

3. The control device (1) according to claim 1 or according to claim 2, **characterized in that** the detection elements (6) comprise third determination elements for determining a conduction state of a diode (D1, D2) through which a current derived from the alternating supply signal (U0) flows, and **in that** the optocoupler (61, 62) is configured to detect the current flowing through the diode (D1, D2) and to emit a rising edge or a falling edge on a logic input (IN1, IN2) of the processing circuit (41) when the value of the current crosses a conduction threshold value of the diode at a time when the alternating supply signal (U0) is substantially equal to zero.

4. The control device (1) according to any one of the preceding claims, **characterized in that** the control elements (4) are configured to emit at least one series of pulses, each pulse of the series of pulses being emitted in synchronism with the control time (tc).

5. The control device (1) according to any one of the preceding claims, **characterized in that** the measurement elements (7) comprise a resistive voltage divider bridge, the resistive voltage divider bridge being electrically linked, on the one hand, to the alternating supply signal (U0), and on the other hand, to a measurement input (INO) of the processing circuit (41), the divider bridge being configured to adapt the alternating supply signal (U0) to the measurement input (INO) of the processing circuit (41).

6. The control device (1) according to any one of the preceding claims, **characterized in that** the first determination elements (8) comprise a time counter integrated into the processing circuit (41), the time counter being started at the first primary time (tp1), and then stopped at the second primary time (tp2).

7. The control device (1) according to any one of the preceding claims, **characterized in that** the second determination elements (9) comprise at least one data recorded in a memory of the processing circuit (41), the stored data comprising a value of a time period (T2) characteristic of the alternating supply signal (U0) for transitioning from a zero value to the predetermined threshold value (VS).

8. A method for controlling a switch (2) for an electromechanical actuator (ACT), the electromechanical actuator (ACT) comprising a control device (1) according to any one of claims 1 to 7, **characterized in that** the method comprises at least:
- a first primary step (EP1) of detecting a rising edge or a falling edge on the logic input (IN1, IN2) of the processing circuit (41), determining a first primary time (tp1);
- a second primary step (EP2) of detecting the reaching or exceeding of a threshold value (VS) by a value measured by the measurement elements (7), determining a second primary time (tp2);
- a third primary step (EP3) of determining a delay value (T1) from the first primary time (tp1) and the second primary time (tp2);
- a first secondary step (ES1) of detecting a rising edge or a falling edge on the logic input (IN1, IN2) of the processing circuit (41), determining a first secondary time (tp2);
- a second secondary step (ES2) of determining a control time (tc) of the switch (2) from the first secondary time (ts1) and the delay value (T1) determined in the third primary step (EP3); and
- a third secondary step (ES3) of controlling the switch (2) from the control time (tc) determined in the second secondary step (ES2).

9. The control method according to claim 8, wherein the third primary step (EP3) comprises:
- a first primary sub-step (EP31) of determining a third primary time (tp3) from the second primary time (tp2), the third primary time (tp3) being calculated from a time period (T2) characteristic of the alternating supply signal (U0) for transitioning from a zero value to the threshold value (VS);
- a second primary sub-step (EP32) of determining the delay (T1) as a difference between the third primary time (tp3) and the first primary time (tp1).

10. The control method according to claim 8, **characterized in that** the primary steps of the method are implemented when the switch (2) is set in an open state and/or when the electrical load (3) is not electrically supplied by the alternating supply signal (U0).

11. The control method according to any one of claims 7 to 10, **characterized in that** the primary steps of the method are repeated an integer number n of times and **in that** the value of the control time (tc) corresponds to an average value of the values of the control times determined at each repetition of the primary steps.
